# FASCICULE DE BREVET EUROPEEN

(11) **EP 1 883 289 B1**
(45) Date de publication et mention de la délivrance du brevet: **27.07.2016**
(21) Numéro de dépôt: 06794428.0
(22) Date de dépôt: 15.05.2006
(51) Int. Cl.: A01G 25/02

(54) **DISPOSITIF D'IRRIGATION ET/OU DE NUTRITION DE CULTURES, APPLICATION D'UN TEL DISPOSITIF ET PROCEDE POUR SA REALISATION**
VORRICHTUNG ZUR BEWÄSSERUNG UND/ODER BEREITSTELLUNG VON NÄHRSTOFFEN FÜR PFLANZEN, VERWENDUNG DIESER VORRICHTUNG UND VERFAHREN ZU IHRER BEREITSTELLUNG
DEVICE FOR IRRIGATING AND/OR PROVIDING NUTRIENTS TO CROPS, USE OF THIS DEVICE AND METHOD FOR THE PROVISION THEREOF

(30) Priorité: 24.05.2005 FR 0551347; 31.05.2005 FR 0551426
(43) Date de publication de la demande: 06.02.2008
(73) Titulaire: MDB Texinov SA, 38110 Saint Didier de la Tour (FR)
(72) Inventeur: DUCOL, Jean-Paul, F-69007 Lyon (FR)
(74) Mandataire: Cabinet Laurent & Charras
(86) Numéro de dépôt international: PCT/FR2006/050443
(87) Numéro de publication internationale: WO 2007/000527

(56) Documents cités:
- EP-A- 1 430 770
- WO-A2-2004/098269
- IE-B1- 40 953
- US-A- 3 315 408
- US-A1- 2002 098 322

## Description

### DOMAINE DE L'INVENTION

La présente invention concerne l'irrigation ou la nutrition de cultures agricoles, horticoles ou arboricoles comprenant. Plus particulièrement, la présente invention se rapporte à un dispositif intégrant une pluralité de tuyaux, réalisé de manière à assurer une irrigation précise de ces cultures. La présente invention concerne également une application particulière et un procédé de fabrication d'un tel dispositif.

### ETAT DE LA TECHNIQUE

De l'art antérieur, on connaît des dispositifs sommaires consistant à poser sur le sol des tuyaux rigides, préalablement équipés en plusieurs points de moyens irrigateurs tels que de simples trous, à proximité des plants de cultures à arroser ou à alimenter en liquide nutritif. La rigidité de ces tuyaux assure un maintien en position convenable de ces tuyaux au gré des éléments, car il leur suffit de deux points d'ancrage pour être maintenus en place.

Cependant, si cette rigidité assure le maintien en position de ces tuyaux, elle induit l'inconvénient de l'imprécision du dispositif d'arrosage, notamment du fait que les tuyaux ne peuvent pas épouser les éventuelles variations de relief du champ ou les courbures des rangées de plants. Ainsi, lorsque le champ présente localement une variation de relief, on comprend aisément que le tuyau se trouve plus ou moins éloigné du sol, donc du plant à arroser et/ou à alimenter.

Par ailleurs, lorsque la rangée de plants présente une courbure, souvent induite par la courbure de la circonférence du champ, le tuyau risque de suivre une trajectoire rectiligne évidemment défavorable à la précision d'arrosage. Dans le meilleur des cas, la courbure peut être grossièrement approximée par des raccords montés entre deux portions de tuyaux aux endroits appropriés du champ.

C'est pourquoi, on rencontre aussi des dispositifs d'irrigation comportant des tuyaux préalablement équipés en plusieurs points de moyens irrigateurs et suffisamment souples pour suivre les reliefs du champ ou les courbures des rangées de plants. Ainsi, les tuyaux peuvent être positionnés suffisamment près des plants à arroser et/ou à alimenter.

Cependant, un tel dispositif, bien que précis, n'est pas fiable. En effet, l'inconvénient de cette souplesse des tuyaux réside dans le fait qu'ils sont facilement mobiles sous l'effet des éléments comme les vents, les fortes pluies et surtout les personnes ou machines travaillant ou évoluant dans le champ. Ainsi, même s'ils ont été précisément positionnés de manière à se trouver au plus près de chaque plant, leur position va dériver dans le temps, donc la précision d'arrosage diminuer pour éventuellement aboutir à un arrosage aléatoire des cultures. Une solution consiste à utiliser de nombreux moyens d'ancrage de manière à maintenir en place ces tuyaux. Néanmoins, il va de soi qu'une telle solution obère le coût final du dispositif d'irrigation et/ou de nutrition.

Ainsi, ces deux types de dispositifs d'irrigation et de nutrition conduisent à un arrosage ou à une alimentation imprécise, voire aléatoire. En conséquence, ces dispositifs accroissent artificiellement la consommation en produits plus ou moins onéreux (eau, engrais...) à fournir aux plantes, sans quoi cette imprécision d'arrosage augmente le risque de perdre les plants, parfois onéreux comme en arboriculture.

De plus, les opérations d'installation de tous ces tuyaux sont relativement fastidieuses, car elles nécessitent le positionnement et l'ancrage de chaque tuyau individuellement.

On a décrit dans le document IE 40953 un dispositif de paillage mettant en oeuvre des tuyaux d'irrigation poreux maintenus au moyen de fils.

### EXPOSÉ DE L'INVENTION

La présente invention a donc pour objet un dispositif d'irrigation ou de nutrition de cultures précis, fiable, bon marché et facile à mettre en place.

L'objet de l'invention consiste en un dispositif d'irrigation et/ou de nutrition de cultures comprenant une pluralité de tuyaux présentant chacun une souplesse appropriée. Chaque tuyau comprend des moyens irrigateurs aptes à fournir le liquide d'irrigation ou de nutrition auxdites cultures. Selon l'invention, les tuyaux sont solidarisés au moyen d'une pluralité de fils s'étendant de part et d'autre de chacun d'eux selon au moins deux directions principales, formant ainsi un filet ou réseau.

Autrement dit, on réalise un filet enserrant les tuyaux de manière à les maintenir en position les uns par rapport aux autres, conférant ainsi à l'ensemble la stabilité de la précision recherchée.

De préférence, deux moyens irrigateurs consécutifs d'un même tuyau et deux tuyaux consécutifs peuvent être respectivement séparés par des intervalles déterminés de manière à positionner chaque moyen irrigateur à proximité d'une desdites cultures à irriguer.

En d'autres termes, chaque moyen irrigateur est positionné au plus près des cultures à irriguer. Cela permet d'atteindre la précision d'irrigation et/ou de nutrition optimale.

En pratique, le filet est réalisé par tricotage à mailles jetées, les fils formant, d'une part, des colonnes de mailles selon l'une des directions principales et, d'autre part, des trames transversales à ces colonnes et s'étendant sur toute ou partie de la largeur du filet. A l'aide de ce procédé de fabrication, on peut à loisir faire varier les mailles, et partant, disposer d'une structure de tenue des tuyaux plus ou moins dense.

Cette construction garantit un bon maintien des tuyaux et, partant assure un positionnement fiable de ceux-ci.

Avantageusement, les tuyaux s'étendent au sein du filet sensiblement parallèlement les uns aux autres et selon l'une des directions principales dudit filet. Les tuyaux sont donc assemblés dans le filet parallèlement les uns aux autres.

Cette configuration est particulièrement adaptée aux cultures disposées sous forme de rangées, ce qui représente la majorité des cas des cultures industrielles et artisanales.

Selon une forme de réalisation pratique de l'invention, les moyens irrigateurs peuvent être constitués de simples perforations réalisées au sein des tuyaux, ou de goutteurs délivrant de façon contrôlée le liquide d'irrigation ou de nutrition.

De tels moyens assurent la fonction d'arrosage souhaitée, que ce soit en continu ou en goutte-à-goutte.

En pratique, la largeur du filet peut être comprise entre 1 et 6 m et la longueur dudit filet est comprise entre quelques mètres jusqu'à 1000 m.

Ces dimensions permettent une bonne adaptation à la plupart des champs cultivés. Ainsi, les champs peuvent-ils être couverts de « bandes » de tuyaux d'une certaine largeur juxtaposées pour couvrir toute la largeur du champ.

Selon une forme particulièrement avantageuse de l'invention, au moins une unité centrale de distribution du liquide d'irrigation et/ou de nutrition peut être connectée auxdits tuyaux. Non seulement cette unité centrale approvisionne chaque tuyau du réseau, mais encore permet-elle de renforcer la stabilité de position de ce réseau de tuyaux en réalisant une sorte de point fixe aux extrémités du filet.

Selon une version évoluée de l'invention, on associe à la structure décrite précédemment une nappe réalisée en un matériau non tissé. Celle-ci permet de diffuser le liquide d'irrigation et/ou de nutrition de manière plus uniforme, par simple phénomène de capillarité.

Par ailleurs, l'invention concerne également l'application géotextile d'un dispositif tel que précédemment caractérisé à des terrains pentus tels que des remblais. Dans ce cas, les fils sont sélectionnés de manière à présenter la résistance mécanique propre à assurer la tenue d'une strate dudit terrain.

Ainsi, lorsque le filet est enterré avec les tuyaux d'irrigation, le filet maintient les tuyaux, mais aussi la couche de terre qui les recouvre.

D'autre part, l'invention concerne un procédé de fabrication d'un dispositif tel que précédemment caractérisé. Selon l'invention, ce procédé comprend une étape consistant à installer les moyens irrigateurs de chaque tuyau sur le site d'utilisation dudit dispositif.

Ce procédé permet une adaptation optimisée de l'emplacement des moyens irrigateurs aux positions des cultures à arroser et/ou alimenter.

### DESCRIPTION SOMMAIRE DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est une représentation schématique d'un dispositif d'irrigation ou de nutrition de cultures conforme à une forme de réalisation de la présente invention.
La figure 2 est une représentation schématique en section transversale du dispositif de la figure 1.
La figure 3 est une représentation schématique du dispositif de la figure 1 après son installation auprès de cultures à irriguer et/ou à alimenter.
La figure 4 est une représentation schématique du dispositif d'irrigation de l'invention mis en oeuvre dans l'une des ses applications géotextiles, la figure 5 étant une représentation schématique d'une autre application géotextile.
La figure 6 est une représentation schématique en perspective du dispositif d'irrigation et/ou de nutrition de l'invention associé à une nappe en non tissé, dont la figure 7 est une représentation en section.

### MODE DE REALISATION DETAILLE DE L'INVENTION

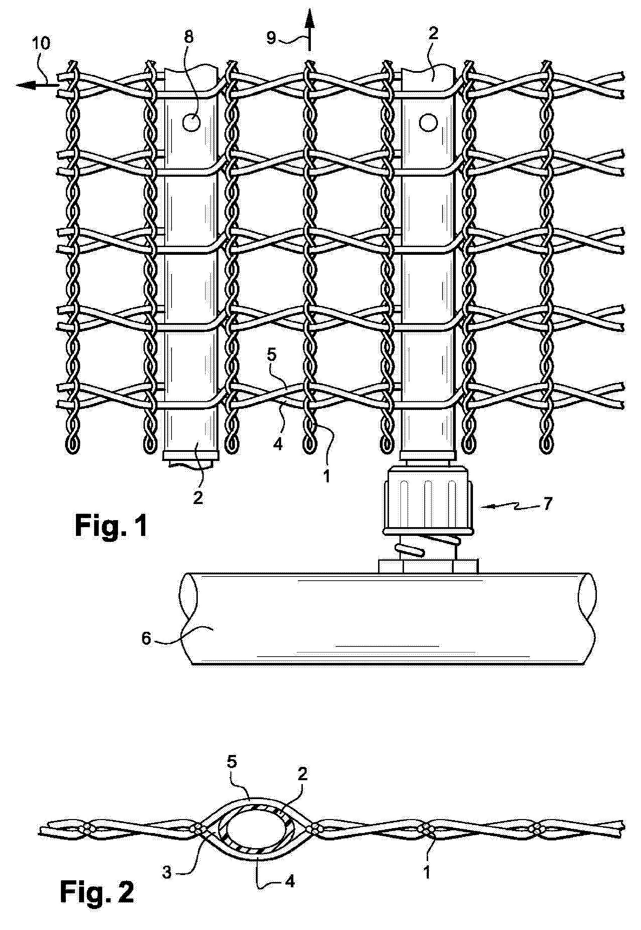

La figure 1 représente un dispositif conforme à une forme de réalisation de l'invention. Ce dispositif d'irrigation et/ou de nutrition de cultures comprend une pluralité de tuyaux (2), réalisés en matière plastique, présentant chacun une souplesse appropriée. Par souplesse appropriée, on entend une souplesse telle que chaque tuyau (2) n'est pas ou n'est que faiblement autoporteur. Ainsi, les tuyaux peuvent suivre les reliefs du champ ou les courbures des rangées de plants. L'assemblage, les matériaux et les dimensions propres à conférer cette souplesse appropriée aux tuyaux peuvent être aisément définis par l'homme du métier.

De même, l'homme du métier est apte à dimensionner les sections débitantes des tuyaux (2) en fonction des besoins d'irrigation ou de nutrition qu'il rencontre.

Chaque tuyau (2) comprend des moyens irrigateurs aptes à fournir le liquide d'irrigation ou de nutrition auxdites cultures. Sur la figure 1, ces moyens sont constitués de simples orifices traversants (8) perforés à même le plastique des tuyaux.

Néanmoins, il pourrait s'agir de goutteurs aptes à délivrer le liquide d'irrigation et/ou de nutrition de manière contrôlée, par exemple en goutte-à-goutte, ou encore de buses d'aspersion projetant un brouillard autour de la zone du plant à arroser. Bien évidemment, le choix de la structure des moyens irrigateurs dépend de la fonction d'irrigation souhaitée, en continu, en goutte-à-goutte, en brume...

Conformément à l'invention, les tuyaux sont solidarisés au moyen d'une pluralité de fils (1, 4, 5) s'étendant de part et d'autre de chaque tuyau selon au moins deux directions principales (9, 10), ici sensiblement orthogonales entre elles.

L'ensemble des fils (1, 4, 5) forme ainsi un filet ou réseau enserrant les tuyaux de manière à les maintenir en position les uns par rapport aux autres. Comme on peut le voir sur les figures, les tuyaux (2) s'étendent dans le filet sensiblement parallèlement les uns aux autres et selon la direction principale (9). Cette configuration est particulièrement adaptée aux cultures disposées sous forme de rangées, ce qui représente la majorité des cas des cultures industrielles et artisanales.

En pratique, le filet est réalisé à l'aide de métiers à tricoter de type RACHEL à mailles jetées.

Au sein de tels métiers, les fils (1, 4, 5) forment d'une part, des colonnes de mailles (1) selon l'une des directions principales (9) et, d'autre part, des trames transversales (4, 5) à ces colonnes (1) et s'étendant sur toute ou partie de la largeur (1) du filet.

Cette construction garantit un bon maintien des tuyaux souples et, partant assure un positionnement précis et fiable, la stabilité de la précision étant notamment conférée à l'ensemble par ce filet. En outre, ce principe de réalisation garantit la conservation de la cohésion à l'en semble de la structure ainsi réalisée.

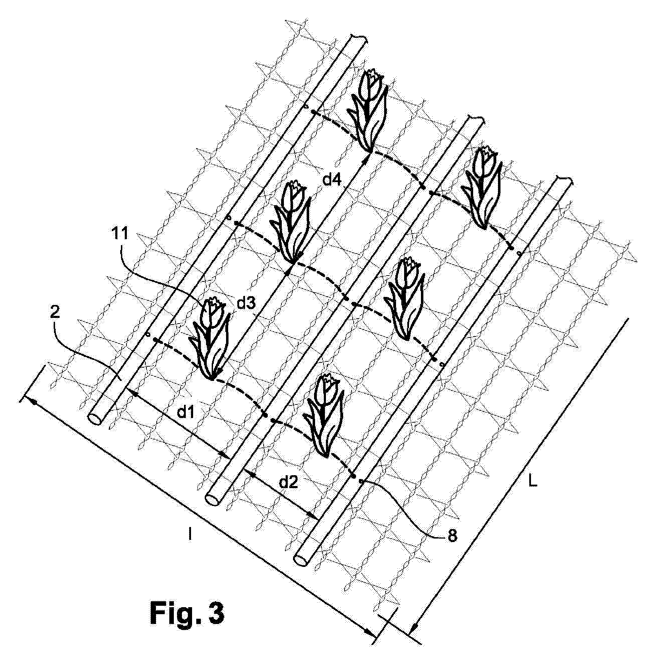

Comme on peut le voir sur la figure 3, deux moyens irrigateurs (8) consécutifs d'un même tuyau (2) et deux tuyaux (2) consécutifs sont respectivement séparés par des intervalles (d3, d4 ; d1, d2) déterminés de manière à positionner chaque moyen irrigateur à proximité d'une des plantes, ici des fleurs (11) à irriguer.

Comme ce dispositif a été fabriqué selon le procédé de fabrication conforme à la présente invention, les trous (8) ont été réalisés sur site, juste avant sa mise en place. Cela permet d'obtenir une adaptation parfaite de l'emplacement des moyens irrigateurs, donc d'atteindre la précision d'irrigation et/ou de nutrition optimale, lorsque l'on a correctement mesuré les distances séparant les plantes et les rangées.

Dans l'exemple de la figure 3, la largeur 1 du filet est de 2 m et sa longueur L de 100 m, soit celle du champ de fleurs (11). Ces dimensions sont adaptées au champ à arroser. Pour couvrir toute la largeur de ce champ, il suffit de juxtaposer plusieurs bandes de 2 m.

Comme on peut le voir sur la figure 1, une unité centrale (6) de distribution du liquide d'irrigation et/ou de nutrition est connectée à chaque tuyau (2) par l'intermédiaire d'un raccord vissable (7). Elle permet non seulement d'approvisionner chaque tuyau (2) du réseau assemblé, mais encore, de par sa rigidité, de renforcer la stabilité du positionnement de ce réseau de tuyaux (2) en réalisant une sorte de point fixe en extrémité de filet.

L'invention a été ici décrite dans une utilisation en surface pour l'arrosage de fleurs. Cependant, elle peut aussi être utilisée sous une couche de terre, comme dispositif d'irrigation assurant également la fonction d'un géotextile retenant des terrains pentus tels que des remblais.

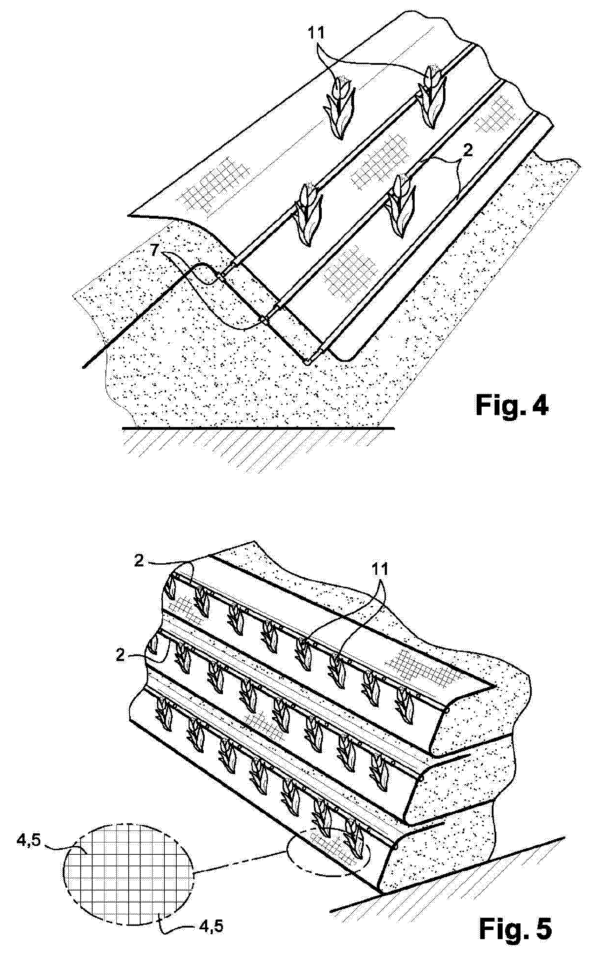

On a représenté en relation avec les figures 4 et 5 la mise en oeuvre du dispositif de l'invention dans son application géotextile, et plus généralement dans une application de génie civil.

Dans cette application, les fils constitutifs du réseau ou filet, sont sélectionnés de manière à présenter la résistance mécanique propre à assurer la tenue d'une strate dudit terrain. Ils sont par exemple réalisés en polyéthylène ou polypropylène. De cette manière, lorsque le filet est enterré avec les tuyaux d'irrigation, le filet maintient les tuyaux, mais aussi la couche de terre qui les recouvre.

Ainsi, dans la figure 4, la structure est mise en oeuvre classiquement, parallèlement à la pente du remblai à consolider. Les tuyaux s'étendent perpendiculairement à la ligne de pente.

Dans l'exemple de la figure 5, on a représenté trois strates différentes et superposées du remblai, chacune des strates étant en quelque sorte confinée par la structure particulière de l'invention, permettant, de par la mise en oeuvre du géotextile de l'invention de remplir d'ores et déjà sa fonction première : le renforcement dudit remblai.

Comme on souhaite, pour des besoins évidents d'esthétique, végétaliser ces remblais, la mise en oeuvre de la structure de l'invention, avec le ou les tuyaux qui s'étendent également de manière sensiblement perpendiculaire par rapport à la ligne de pente, permet de promouvoir l'irrigation.

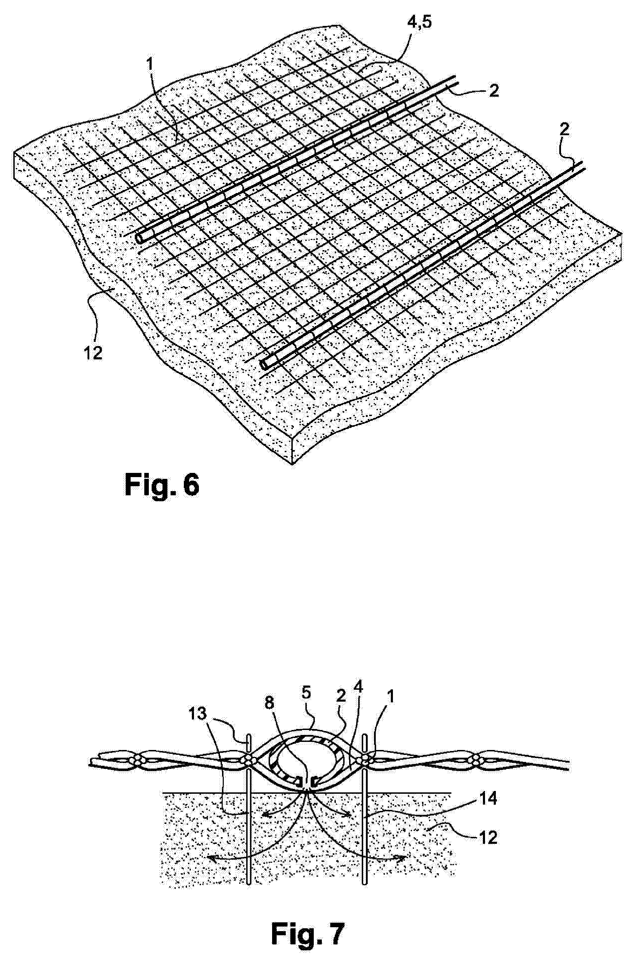

Dans une version évoluée de l'invention, plus particulièrement décrite en relation avec les figures 6 et 7, on associe au disposition d'irrigation et de nutrition décrit précédemment une nappe (12) réalisée en non tissé.

Ce non tissé peut être constitué de fibres synthétiques, du type polyester ou polypropylène, mais peut également être réalisé à partir de fibres naturelles, cellulose, coton, chanvre, etc...

Cette nappe (12) de non tissé peut être associée au dispositif précédemment décrit, et déjà réalisé par simple couture. Cependant, toujours en partant d'un tel dispositif déjà réalisé, on peut l'associer à la nappe de non tissé par solidarisation au moyen de bandes de non tissé, avantageusement de même nature que la nappe en non tissé (12), et localement liées à ladite nappe de non tissé en suite d'une opération de fusion locale. Cette fusion intervient entre les mailles définies par le réseau (1, 4, 5) enserrant les tuyaux (2). Ce mode particulier de réalisation est par exemple décrit dans la demande de brevet français du Demandeur, non encore publiée, et déposée sous le numéro FR 05.50953.

Selon une variante, la réalisation du dispositif d'irrigation et/ou de nutrition s'effectue concomitamment avec la solidarisation à la nappe de non tissé (12) selon la technique dite « RACHEL ». Pour ce faire, on met en oeuvre un métier à tricoter à mailles jetées avec insertion de non tissé (avec ou sans insertion frontale de trame), par exemple du type KARL MAYER ou LIBA. Les fils de liage associés à des trames sectionnelles avec des armures appropriées solidarisent les tuyaux (2) à la nappe de non tissé, et sont aussi susceptibles de créer l'espacement souhaité entre deux tuyaux consécutifs. Ils sont par exemple réalisés en polyester ou en polyéthylène. Ils assurent ainsi la liaison avec la nappe en non tissé (12) en des lieux périodiques (13, 14).

L'adjonction de cette nappe en non tissé procure un certain nombre de résultats. L'eau, le liquide d'irrigation et ou de nutrition, acheminé et déposé par les tuyaux (2) et délivré par les moyens irrigateurs (8) est distribué et réparti de manière plus uniforme en raison de l'interposition de ladite nappe entre lesdits tuyaux et le sol.

Les liquides en question sont en effet véhiculés au sein de la nappe par effet de « mèche » ou par capillarité. Cette facilité de progression du liquide au sein de la nappe est dépendante de la nature des matériaux qui la constituent outre de sa texture.

D'autres applications sont envisageables ainsi que d'autres procédés de fabrication du dispositif conforme à l'invention sans pour autant sortir du cadre de cette invention. On peut par exemple prévoir d'installer des goutteurs avant la livraison du dispositif sur site ; les goutteurs étant alors installés en fonction des emplacements des plants de cultures indiqués par l'utilisateur final.

De même, l'utilisation du dispositif a été ici décrite en relation avec des cultures horticoles, mais il pourrait s'agir tout aussi bien de cultures agricoles ou arboricoles ou autres.

## Revendications

1. Dispositif d'irrigation et/ou de nutrition de cultures (11) comprenant une pluralité de tuyaux (2) mutuellement espacés et présentant chacun une souplesse appropriée, chaque tuyau (2) comprenant des moyens irrigateurs (8) mutuellement espacés et aptes à délivrer le liquide d'irrigation ou de nutrition auxdites cultures (11), lesdits tuyaux (2) étant solidarisés au dispositif au moyen d'une pluralité de fils (1, 4, 5) s'étendant de part et d'autre de chaque tuyau (2) selon au moins deux directions principales (9, 10), formant ainsi un filet ou réseau ouvert, ***caractérisé* en ce que** le filet est réalisé par tricotage sur un métier à tricoter à mailles jetées, lesdits fils (1, 4, 5) formant, d'une part, des colonnes de mailles (1) selon l'une desdites directions principales (9) et, d'autre part, des trames (4, 5) s'étendant transversalement par rapport auxdites colonnes (10) selon toute ou partie de la largeur dudit filet.

2. Dispositif d'irrigation et/ou de nutrition de cultures (11) selon la revendication 1, ***caractérisé* en ce que** les tuyaux (2) s'étendent dans le filet sensiblement parallèlement les uns aux autres et selon l'une desdites directions principales (9, 10).

3. Dispositif d'irrigation et/ou de nutrition de cultures (11) selon l'une des revendications précédentes, ***caractérisé* en ce que** les moyens irrigateurs (8) sont constitués de simples perforations ménagées au sein des tuyaux (2).

4. Dispositif d'irrigation et/ou de nutrition de cultures (11) selon l'une des revendications 1 et 2, ***caractérisé* en ce que** les moyens irrigateurs (8) sont constitués de goutteurs délivrant de façon contrôlée le liquide d'irrigation et/ou de nutrition.

5. Dispositif d'irrigation et/ou de nutrition de cultures (11) selon l'une des revendications 1 à 4, ***caractérisé* en ce que** deux moyens irrigateurs (8) consécutifs d'un même tuyau (2) et deux tuyaux (2) consécutifs sont respectivement séparés par des intervalles (d3, d4 ; d1, d2) déterminés de manière à positionner chaque moyen irrigateur (8) à proximité d'une desdites cultures (11) à irriguer.

6. Dispositif d'irrigation et/ou de nutrition de cultures (11) selon l'une des revendications précédentes, ***caractérisé* en ce qu'**au moins une unité centrale (6) de distribution du liquide d'irrigation et/ou de nutrition est connectée auxdits tuyaux (2).

7. Dispositif d'irrigation et/ou de nutrition de cultures (11) selon l'une des revendications précédentes, ***caractérisé* en ce qu'**il comporte en outre une nappe (12) réalisée en un matériau non tissé, associée audit dispositif par couture, soudage ou par liage par la technique de tricotage dite de maille jetée.

8. Application géotextile d'un dispositif selon l'une des revendications précédentes à des terrains pentus tels que des remblais, lesdits fils (1, 4, 5) étant sélectionnés de manière à présenter la résistance mécanique propre à assurer la tenue d'une strate dudit terrain.

9. Procédé de fabrication d'un dispositif d'irrigation et/ou de nutrition de cultures (11) selon l'une des revendications 1 à 7, ***caractérisé* en ce qu'**il comprend une étape consistant à installer les moyens irrigateurs (8) de chaque tuyau (2) sur le site d'utilisation dudit dispositif.

## Patentansprüche

1. Vorrichtung zur Bewässerung und/ oder Ernährung von Kulturen (11) mit einer Vielzahl von räumlich voneinander getrennten Schläuchen (2), die jeweils eine angemessene Biegsamkeit aufweisen, wobei jeder Schlauch (2) über Bewässerungsmittel (8) verfügt, die räumlich voneinander getrennt sind und in der Lage sind, die Bewässerungs- oder Nährflüssigkeit auf diese Kulturen (11) zu bringen, wobei diese Schläuche (2) an der Vorrichtung über zahlreiche Fäden (1, 4, 5) befestigt sind, die beiderseits jedes Schlauchs (2) in mindestens zwei Hauptrichtungen (9, 10) verlaufen, und so ein offenes Netz bilden, ***dadurch gekennzeichnet, dass*** das Netz auf einer Kettenwirkmaschine gestrickt wird, wobei diese Fäden (1, 4, 5) einerseits Maschenstäbchen (1) in einer der beiden genannten Hauptrichtungen (9) und andererseits Reihen (4, 5), die quer zu diesen Stäbchen (10) verlaufen, über die gesamte oder einen Teil der Breite dieses Netzes bilden.

2. Vorrichtung zur Bewässerung und/ oder Ernährung von Kulturen (11) gemäß Anspruch 1, ***dadurch gekennzeichnet, dass*** die Schläuche (2) entsprechend einer der genannten Hauptrichtungen (9, 10) im Netz deutlich parallel zueinander liegen.

3. Vorrichtung zur Bewässerung und/ oder Ernährung von Kulturen (11) gemäß einem der vorhergehenden Ansprüche, ***dadurch gekennzeichnet, dass*** die Bewässerungsmittel (8) aus einfachen Perforierungen bestehen, die in den Schläuchen (2) ausgespart sind.

4. Vorrichtung zur Bewässerung und/ oder Ernährung von Kulturen (11) gemäß einem der vorhergehenden Ansprüche 1 und 2, ***dadurch gekennzeichnet, dass*** die Bewässerungsmittel (8) aus Tropfern bestehen, die die Bewässerungs- und/ oder Nährflüssigkeit kontrolliert abgeben.

5. Vorrichtung zur Bewässerung und/ oder Ernährung von Kulturen (11) gemäß einem der vorhergehenden Ansprüche 1 bis 4, *dadurch gekenntzeichnet, dass* zwei aufeinanderfolgende Bewässeningsmittel (8) desselben Schlauchs (2) und von zwei aufeinanderfolgenden Schläuchen (2) jeweils durch Intervalle (d3, d4; d1, d2) getrennt sind, die so festgelegt werden, dass jedes Bewässerungsmittel (8) in die Nähe einer der genannten, zu bewässernden Kulturen (11) gelegt wird.

6. Vorrichtung zur Bewässerung und/ oder Ernährung von Kulturen (11) gemäß einem der vorhergehenden Ansprüche, ***dadurch gekennzeichnet, dass*** mindestens eine zentrale Einheit (6) zur Verteilung der Bewässerungs- und/ oder Nährflüssigkeit mit diesen Schläuchen (2) verbunden ist.

7. Vorrichtung zur Bewässerung und/ oder Ernährung von Kulturen (11) gemäß einem der vorhergehenden Ansprüche, *dadurch gekennzeichet, dass* sie außerdem eine Schicht (12) aus einem nicht gewebten Material enthält, das mit dieser Vorrichtung vernäht, verschweißt oder durch die sogenannte Kettwirktechnik verbunden ist.

8. Geotextiler Einsatz einer Vorrichtung gemäß einem der vorhergehenden Ansprüche, bei Hanglagen, wie Dämmen, wobei diese Fäden (1, 4, 5) so ausgewählt werden, dass sie die mechanische Festigkeit aufweisen, um zu gewährleisten, dass auf diesem Boden eine Vegetationsdecke hält.

9. Vorrichtung zur Bewässerung und/ oder Ernährung von Kulturen (11) gemäß einem der vorhergehenden Ansprüche 1 bis 7, ***dadurch gekennzeichnet, dass*** sie eine Stufe enthält, die darin besteht, die Bewässerungsmittel (8) jedes Schlauchs (2) am Einsatzort dieser Vorrichtung zu installieren.

## Claims

1. Crop (11) watering and/or nutrition device comprising a plurality of pipes (2) mutually spaced from each other, each pipe having an appropriate flexibility, each pipe (2) comprising irrigator means (8) mutually spaced from each other capable of delivering the irrigation or nutrition liquid to the said crops (11), said pipes (2) being joined to the device by means of a plurality of threads (1, 4, 5) extending on either side of each pipe (2) in at least two main directions (9, 10), thus forming a opened net or network, **characterized in that** the net is made by knitting on a warp knitting machine, said threads (1, 4, 5) forming, on the one hand, columns of stitches (1) in one of the said main directions (9) and, on the other hand, wefts (4, 5) that are transverse with respect to the said columns (10) and extending over all or part of the width of the said net.

2. Crop (11) watering and/or nutrition device according to claim 1, **characterized in that** the pipes (2) extend within the net substantially parallel with each other and in one of the said main directions (9, 10).

3. Crop (11) watering and/or nutrition device according to one of the preceding claims, **characterized in that** the irrigator means (8) consist of simple perforations produced in the pipes (2).

4. Crop (11) watering and/or nutrition device according to one of claims 1 and 2, **characterized in that** the irrigator means (8) consist of tricklers delivering the irrigation and/or nutrition liquid in a controlled manner.

5. Crop (11) watering and/or nutrition device according to one of claims 1 to 4, **characterized in that** two consecutive irrigator means (8) of a same pipe (2) and two consecutive pipes (2) are respectively separated by intervals (d3, d4; d1, d2) determined in such a way as to position each irrigator means (8) close to one of the said crops (11) to be irrigated.

6. Crop (11) watering and/or nutrition device according to one of the preceding claims, **characterized in that** at least one central unit (6) for the distribution of irrigation and/or nutrition liquid is connected to the said pipes (2).

7. Crop (11) watering and/or nutrition device according to one of the preceding claims, **characterized in that** it furthermore comprises a sheet (12) made from non-woven material, attached to the said device by sewing, welding or by binding using the so-called warp knitting technique.

8. Geotextile application of a device according to one of the preceding claims to sloping lands such as embankments, the said threads (1, 4, 5) being selected in such a way as to exhibit the mechanical strength capable of ensuring the support of a stratum of the said land.

9. Method of manufacturing a crop (11) watering and/or nutrition device according to one of claims 1 to 7, **characterized in that** it comprises a step consisting in installing the irrigator means (8) of each pipe (2) on the site of utilization of the said device.
